# FASCICULE DE BREVET EUROPEEN

(11) **EP 0 323 335 B1**
(45) Date de publication et mention de la délivrance du brevet: **29.11.1995**
(21) Numéro de dépôt: 88403308.5
(22) Date de dépôt: 23.12.1988
(51) Int. Cl.: H02J 7/35, H01L 31/045, A45C 15/00

(54) **Valise polyvalente**
Mehrzweckkoffer
Multiple purpose case

(30) Priorité: 24.12.1987 FR 8718158
(43) Date de publication de la demande: 05.07.1989
(73) Titulaire: Djelouah, Myriam, F-45500 Saint Denis de l'Hotel (Loiret) (FR)
(72) Inventeur: Djelouah, Myriam, F-45500 Saint Denis de l'Hotel (Loiret) (FR)
(74) Mandataire: Cabinet HERRBURGER

(56) Documents cités:
- DE-A- 3 010 571
- DE-A- 3 314 251
- DE-A- 3 727 892
- DE-U- 8 210 972
- DE-U- 8 801 229
- US-A- 4 522 047

## Description

La présente invention concerne une valise polyvalente constituant une source de courant électrique de réserve.

Cette valise comporte, de manière classique, un corps principal ainsi qu'un couvercle définissant deux faces internes mobiles entre une position d'ouverture dans laquelle elles font un angle déterminé et une position de fermeture dans laquelle elles sont repliées l'une contre l'autre.

Depuis quelques années, on observe un accroissement considérable des loisirs de plein air du type camping, caravaning, plaisance...

Les adeptes de ces loisirs recherchent un confort maximum, et, pour les satisfaire, les industriels ont mis au point un certain nombre d'appareils, notamment d'appareils ménagers ou de types autres (radios, télévisions, ...) qui sont généralement destinés à être alimentés par piles ou batteries en un courant 24 volts.

Ces appareils ont souvent une consommation en électricité relativement importante, qui n'est pas sans poser de multiples problèmes, notamment pour les plaisanciers ou les adeptes du camping dit "sauvage".

Il n'existe actuellement aucun dispositif de nature à résoudre ces problèmes de manière satisfaisante.

Parmi les dispositifs antérieurs se rattachant à un domaine de la technique similaire, on peut citer le document DE-A-30 10 571 qui cherche à proposer à des utilisateurs tels que plaisanciers, adeptes du vol à voile, alpinistes ou randonneurs séjournant dans des abris isolés, un dispositif transportable leur permettant de disposer constamment d'une source de courant électrique ; à cet effet, ce document décrit un dispositif de type portefeuille constitué par deux plaques rabattables sur elles-mêmes, réunies par une charnière et dont les faces internes portent des capteurs solaires répartis sur toute leur surface de façon à transformer l'énergie lumineuse en une énergie électrique devant être consommée immédiatement. Ce dispositif présente l'inconvénient de n'être opérationnel que par temps ensoleillé.

On peut également, pour information, signaler l'existence du document DE-A-33 14 251 qui cherche à donner à un appareil ménager ou à un outil électrique, tel qu'une perceuse, équipé de batteries à sa partie interne une autonomie suffisante ; à cet effet, ce document décrit un conditionnement muni, d'une part, à sa partie interne d'un logement destiné à recevoir l'appareil ou l'outil ainsi que d'un logement destiné à recevoir une batterie auxiliaire de réserve pouvant, en cas de besoin, être substituée aux batteries internes de l'appareil ou de l'outil et, d'autre part, sur l'une de ses faces extérieures, de capteurs solaires pouvant être reliés aux batteries de l'appareil ou de l'outil ou à la batterie auxiliaire pour permettre le chargement de ces batteries lorsque l'appareil ou l'outil n'est pas utilisé et que le conteneur est laissé au repos à la lumière solaire.

La présente invention a pour objet de remédier aux inconvénients de l'état de la technique en proposant une valise polyvalente du type ci-dessus, comportant :
- un corps principal ainsi qu'un couvercle munis chacun d'une face interne, ces deux faces étant mobiles entre une position d'ouverture dans laquelle elles font un angle (α) déterminé et une position de fermeture dans laquelle elles sont repliées l'une contre l'autre,
- une poignée permettant de transporter la valise en position de fermeture,
- un logement creux délimité dans le corps principal par sa face interne,
- au moins une batterie montée dans le logement creux et susceptible d'accumuler de l'énergie électrique pour la redistribuer en cas de besoin,
- des capteurs solaires répartis sur la totalité de la surface des faces internes de façon à transformer de l'énergie lumineuse en énergie électrique et à fournir cette énergie à la ou aux batteries,
- un circuit d'alimentation susceptible d'alimenter la ou les batteries directement à partir du réseau,
- des organes de liaison de la ou des batteries avec l'alternateur d'un véhicule automobile ou d'une moto, et
- une dynamo associée à la ou aux batteries et destinée à être alimentée en énergie mécanique par une manivelle susceptible d'être mise en place dans un logement spécialement prévu à cet effet dans le corps principal de la valise.

Bien entendu, conformément à l'invention, la ou les batteries sont reliées à un circuit de distribution, notamment en courant 24 volts contenant des éléments classiques (redresseurs, convertisseurs...).

Cette valise est particulièrement avantageuse étant donné que pour emmagasiner de l'électricité, il suffit le plus souvent à l'utilisateur d'ouvrir celle-ci et de la placer dans cette position, face au soleil, dont les rayons sont généralement généreux, vu que le dispositif doit, le plus souvent être utilisé par des campeurs ou des plaisanciers, donc, en été et dans des zones ensoleillées.

De façon classique, les capteurs sont constitués par des modules eux-mêmes constitués de cellules solaires ; la lumière permet la circulation des électrons contenus dans ces cellules pour produire un courant électrique. Bien entendu, l'énergie obtenue est proportionnelle à la surface des capteurs, raison pour laquelle il est préférable de répartir ceux-ci sur la totalité des faces internes de la valise.

La valise conforme à l'invention est néanmoins polyvalente et permet à l'utilisateur de pallier à l'absence d'ensoleillement pour malgré tout alimenter la ou les batteries en énergie électrique obtenue par transformation d'énergie mécanique, ou encore directement stockée à partir du courant secteur.

Bien entendu, la liste susmentionnée d'organes permettant l'obtention d'énergie électrique n'est pas exhaustive, et, on pourrait prévoir des moyens autres, tels que par exemple une éolienne permettant d'emmagasiner dans la ou les batteries de l'énergie soutirée de celle des vents.

De même, il est possible, sans pour cela sortir du cadre de l'invention, d'équiper la valise d'organes autres, par exemple, d'un chargeur de piles placé sur l'une des ses faces latérales.

Par ailleurs, il est possible de combiner aux capteurs solaires répartis sur les deux faces internes de la valise, des capteurs auxiliaires placés dans des serviettes.

Selon une autre caractéristique de l'invention, la valise comporte un régulateur susceptible de régler la charge de la ou des batteries.

Ce régulateur permet de mesurer avec précision le seuil de charge de la ou des batteries et de commander l'ouverture ou la fermeture des circuits permettant de relier ces dernières au capteur solaire ou encore de commander le circuit de distribution d'électricité.

Selon une autre caractéristique de l'invention, la valise comporte une lampe mobile entre une position d'utilisation ou relevée et une position de repos dans laquelle elle est rabattue dans un logement spécialement prévu à cet effet dans le couvercle de la valise.

Cette lampe peut être alimentée soit par le circuit de distribution à partir de la ou des batteries, soit directement à partir de la manivelle.

Pour améliorer l'éclairement obtenu à partir de cette lampe, il est intéressant de la faire coopérer avec une surface réfléchissante.

Compte tenu de ce qui précède, la valise polyvalente qui fait l'objet de l'invention, permet de stocker et d'avoir constamment, à sa disposition, de l'énergie électrique obtenue par transformation d'énergie lumineuse ou d'énergie mécanique ou encore directement stockée à partir du courant secteur.

Les caractéristiques de la valise polyvalente qui fait l'objet de l'invention, seront décrites plus en détail en se référant aux dessins annexés dans lesquels :
- la figure 1 est une vue en perspective de la valise en position ouverte,
- la figure 2 est une vue frontale de la valise fermée, la lampe ayant été relevée,
- la figure 3 est une coupe frontale de la valise fermée, lampe rabattue,
- la figure 4 est une coupe transversale de la valise fermée, lampe rabattue,
- la figure 5 est un schéma correspondant à la figure 4, lampe relevée.

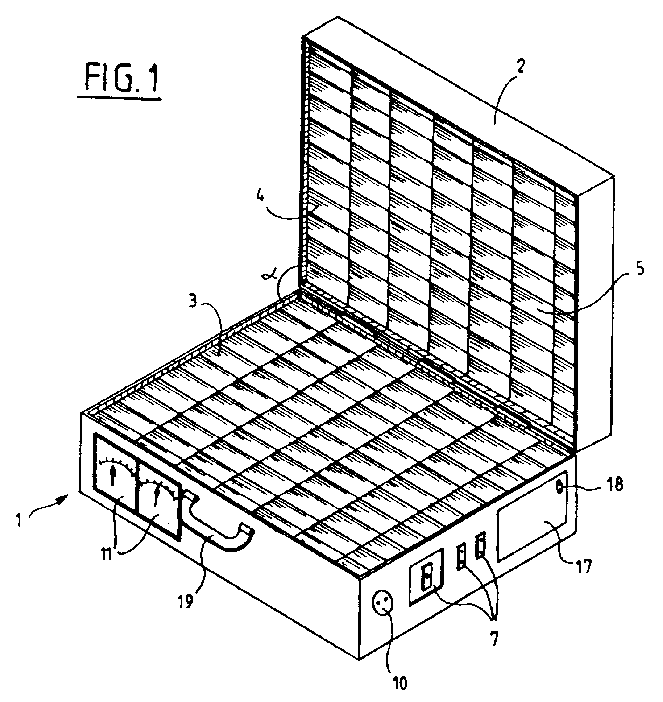

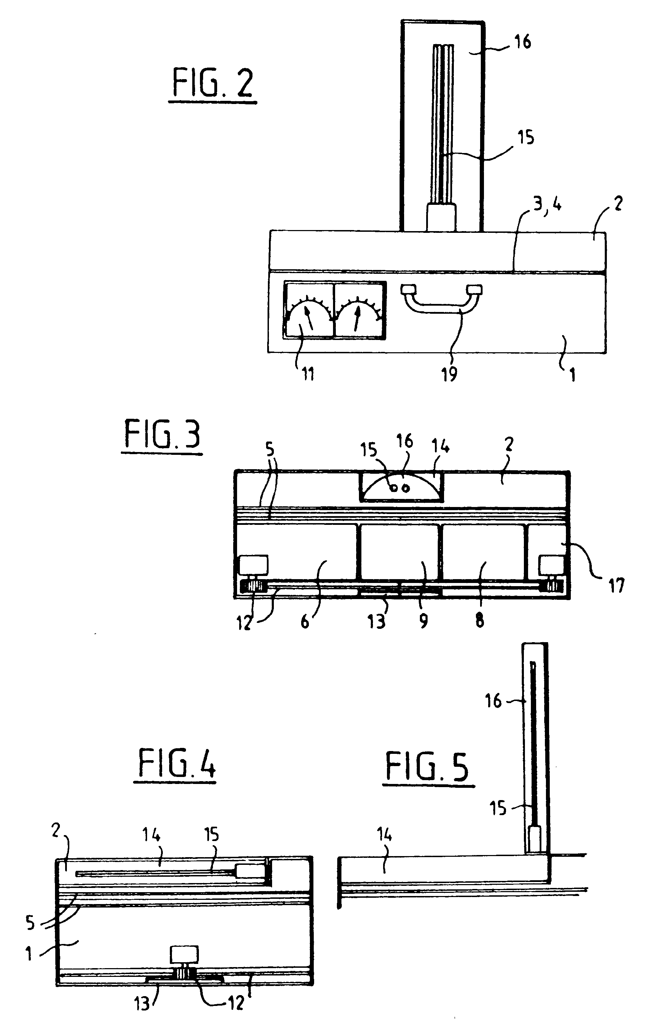

Selon la figure 1, la valise polyvalente est schématiquement constituée d'un corps principal 1 ainsi que d'un couvercle 2 qui définit deux faces internes 3 et 4. Cette valise est mobile entre une position d'ouverture représentée sur la figure 1 dans laquelle les faces internes 3 et 4 font entre elles un angle déterminé α et une position de fermeture représentée sur les figures 2 à 5 dans laquelle ces faces 3 et 4 se trouvent en appui l'une contre l'autre.

Selon la figure 1, les faces internes 3 et 4 portent des capteurs solaires 5 qui sont répartis sur toute leur surface. Ces capteurs sont susceptibles de transformer l'énergie lumineuse du rayonnement solaire en de l'énergie électrique qui est transmise à un système de batteries 6 représenté sur la figure 3, puis, emmagasinée dans celui-ci pour pouvoir être, en cas de besoin, fournie à un circuit de distribution aboutissant aux bornes 7 (figure 1) dans le but de permettre le fonctionnement d'un appareillage d'éclairage ou d'un appareillage domestique quelconque. Un convertisseur 8 permet de transformer le courant obtenu à la sortie du système de batteries 6 en un courant 24 volts.

Selon la figure 3, il est, par ailleurs, prévu un régulateur 9 dont le rôle est de commander le stockage de l'énergie électrique par le système de batteries 6 ainsi que l'alimentation du circuit de distribution.

Selon la figure 1, une prise 10 reliée à un circuit d'alimentation non représenté permet d'alimenter directement le système de batteries 6 à partir du secteur ; des cadrans de contrôle 11 représentés sur les figures 1 et 2 permettent de contrôler à tout moment l'état de charge du système de batteries 6 et donc de vérifier que l'on dispose avec la valise d'une source de courant électrique de réserve prête à être utilisée notamment en cas de panne.

Selon les figures 3 et 4, la valise renferme également une dynamo 12 susceptible d'être alimentée en énergie mécanique à partir d'une manivelle non représentée placée dans un logement 13 spécialement prévu à cet effet sur la face inférieure du corps principal 1 de la valise.

La dynamo 12 transforme cette énergie mécanique en de l'énergie électrique qui est transmise au système de batteries 6.

Selon une variante non représentée sur les figures, il est également possible de relier les batteries 6 directement à l'alternateur d'un véhicule automobile ou d'une moto afin d'utiliser l'énergie mécanique fournie par celui-ci.

Par ailleurs, et selon les figures 2 à 5, la partie supérieure du couvercle 2 de la valise comporte un logement 14 dans lequel est montée et articulée une lampe 15 partiellement entourée d'un réflecteur 16 de forme quelconque, notamment parabolique. L'ensemble constitué par la lampe 15 et le réflecteur 16 est mobile entre une position relevée représentée sur les figures 2 et 5 et une position rabattue représentée sur les figures 3 et 4.

La lampe 15 peut être alimentée en électricité soit par les batteries 6 soit directement à partir de la manivelle.

Selon les figures 1 et 3, la valise est également munie, sur l'une des faces latérales de son corps principal, d'un chargeur de piles 17 muni d'un voyant indicateur de charge 18.

Bien entendu, la valise objet de l'invention pourrait contenir des éléments autres sans pour cela sortir du cadre de cette dernière. Elle constitue un ensemble très maniable en position fermée, grâce notamment à sa poignée 19 et permet à l'utilisateur de disposer toujours d'une source de courant de réserve.

## Revendications

1. Valise polyvalente constituant une source de courant électrique de réserve et comportant :
- un corps principal (1) ainsi qu'un couvercle (2) munis chacun d'une face interne (3, 4), ces deux faces étant mobiles entre une position d'ouverture dans laquelle elles font un angle (α) déterminé et une position de fermeture dans laquelle elles sont repliées l'une contre l'autre,
- une poignée (19) permettant de transporter la valise en position de fermeture,
- un logement creux délimité dans le corps principal (1) par sa face interne (3),
- au moins une batterie (6) montée dans le logement creux et susceptible d'accumuler de l'énergie électrique pour la redistribuer en cas de besoin,
- des capteurs solaires (5) répartis sur la totalité de la surface des faces internes (3, 4) de façon à transformer de l'énergie lumineuse en énergie électrique et à fournir cette énergie à la ou aux batteries (6),
- un circuit d'alimentation (10) susceptible d'alimenter la ou les batteries (6) directement à partir du réseau,
- des organes de liaison de la ou des batteries (6) avec l'alternateur d'un véhicule automobile ou d'une moto, et
- une dynamo (12) associée à la ou aux batteries (6) et destinée à être alimentée en énergie mécanique par une manivelle susceptible d'être mise en place dans un logement (13) spécialement prévu à cet effet dans le corps principal (1) de la valise.

2. Valise selon la revendication 1, caractérisée en ce qu'elle comporte un régulateur (9) susceptible de régler la charge de la ou des batteries (6).

3. Valise selon l'une quelconque des revendications 1 et 2, caractérisée en ce qu'elle comporte une lampe (15) mobile entre une position d'utilisation ou relevée et une position de repos dans laquelle elle est rabattue dans un logement (14) spécialement prévu à cet effet dans le couvercle (2) de la valise.

4. Valise selon la revendication 3, caractérisée en ce que la lampe coopère avec un réflecteur (16).

5. Valise selon l'une quelconque des revendications 1 à 4, caractérisée en ce qu'elle comporte des organes (11) d'indication de l'état de charge de la ou des batteries (6).

## Patentansprüche

1. Mehrzweckkoffer, der eine elektrische Reservestromquelle bildet, umfassend:
einen Hauptkörper (1) sowie einen Deckel (2), die jeweils mit einer Innenfläche (3,4) versehen sind, wobei diese beiden Flächen zwischen einer Öffnungsposition, in der sie einen bestimmten Winkel (α) bilden, und einer Schließposition, in der sie eine gegen die andere zusammengeklappt sind, bewegbar sind,
einen Griff (19) zum Transportieren des Koffers in der Schließposition,
einen in dem Hauptkörper (1) durch seine Innenfläche (3) begrenzten hohlen Aufnahmeraum,
zumindest eine Batterie (6), die in dem Hohlraum montiert ist und elektrische Energie speichern kann, um diese bei Bedarf wieder abzugeben,
Sonnenkollektoren (5), die über die gesamte Oberfläche der Innenflächen (3,4) derart verteilt sind, daß sie Lichtenergie in elektrische Energie umwandeln und diese an die Batterie oder Batterien (6) liefern können,
einen Speisestromkreis (10) zur Versorgung der Batterie oder Batterien (6) direkt aus dem Netz,
Elemente für den Anschluß der Batterie oder Batterien (6) an den Wechselstromgenerator eines Kraftfahrzeuges oder eines Motorrads und
einen Dynamo (12), der der oder den Batterien (6) zugeordnet und zur Versorgung mit mechanischer Energie durch eine Kurbel bestimmt ist, die in einer Aufnahme (13) angesetzt werden kann, die speziell für diesen Zweck in dem Hauptkörper (1) des Koffers vorgesehen ist.

2. Koffer nach Anspruch 1, gekennzeichnet durch einen Regler (9) zur Regelung der Ladung der Batterie oder Batterien (6).

3. Koffer nach einem der Ansprüche 1 und 2, gekennzeichnet durch eine Lampe (15), die zwischen einer Benutzungs- oder ausgeklappten Position und einer Ruheposition bewegbar ist, in der sie in eine Aufnahme (14) umgeklappt ist, die speziell für diesen Zweck in dem Deckel (2) des Koffers vorgesehen ist.

4. Koffer nach Anspruch 3, dadurch gekennzeichnet, daß die Lampe mit einem Reflektor (16) zusammenwirkt.

5. Koffer nach einem der Ansprüche 1 bis 4, gekennzeichnet durch Elemente (11) zur Anzeige des Ladezustands der Batterie oder Batterien (6).

## Claims

1. Multi-functional case, comprising a spare electrical power supply and comprising:
- a main body (1) as well as a lid (2), each having an inner face (3, 4), these two faces being movable between an open position in which they form a predetermined angle (α) and a closed position in which they are folded one on top of the other,
- a handle (19) for carrying the case in the closed position,
- a hollow housing defined in the main body (1) by its inner face (3),
- at least one battery (6) mounted in the hollow housing and capable of accumulating electrical energy for redistribution in case of need,
- solar receptors (5) distributed over the whole area of the inner faces (3, 4) so as to transform light energy into electrical energy and to supply this energy to the battery or batteries (6),
- a supply circuit (10) for feeding the battery or batteries (6) direct from the mains,
- elements for connecting the battery or batteries (6) to the alternator of a motor vehicle or motor-cycle, and
- a dynamo (12) associated with the battery or batteries (6) and intended to be supplied with mechanical energy by a crank capable of being mounted in a housing (13) provided specially for the purpose in the main body (1) of the case.

2. Case according to claim 1, characterised in that it comprises a regulator (9) for regulating the charge of the battery or batteries (6).

3. Case according to either of claims 1 or 2, characterised in that it comprises a lamp (15) movable between an operating position and a raised rest position, in which it is folded away in a housing (14) specially provided for the purposes in the lid (2) of the case.

4. Case according to claim 3, characterised in that the lamp cooperates with a reflector (16).

5. Case according to any one of claims 1 to 4, characterised in that it comprises elements (11) for indicating the state of charge of the battery or batteries (6).
